# EUROPEAN PATENT APPLICATION

(11) **EP 3 838 377 A1**
(43) Date of publication of application: **23.06.2021**
(21) Application number: 19217864.8
(22) Date of filing: 19.12.2019
(51) Int. Cl.: B01D 46/00, B01D 46/02, B01D 46/04, B01D 46/44

(54) **A FILTER SYSTEM AND A SENSOR ARRANGEMENT CONFIGURED TO MONITOR PERFORMANCE OF FILTER ELEMENTS**

(71) Applicant: Nederman Holding AB, 251 06 Helsingborg (SE)
(72) Inventor: BERGER, Sascha, DE-41472 NEUSS (DE); SCHILLI, Markus Wilhelm, 77781 Biberach (DE); SCHÄTZLE, Gerd Jürgen, 77978 Schuttertal (DE)
(74) Representative: AWA Sweden AB

(57) **Abstract**

A filter system is provided which comprises a housing (100) having a first zone (102) and a second zone (103) separated by a partition wall (104), an inlet duct (108) configured to receive and supply a dust laden gas flow into the first zone, and an outlet duct (110) configured to release a filtrated gas flow from the second zone. A plurality of filter sections (200) are arranged in the first zone. The first zone communicates with the second zone via filter elements (201) thereby allowing a filtrated gas flow to be fed from the first to the second zone. A filter cleaning device (300) arranged in the second zone to selectively clean a sub-set of filter sections (200). A sensor arrangement (400) is configured to detect and determine an abnormal presence of dust in the released filtrated gas flow, and to associate a determination of an abnormal presence of dust with a specific sub-set of filter sections based on the presently cleaned sub-set of filter sections. Also a sensor arrangement (400) is provided.

## Description

### Technical field

The present invention refers to a filter system and a sensor arrangement configured to monitor performance of filter elements.

### Technical background

It is well known in the industry to separate particulate matter, such as dust particles, from a gaseous fluid flow to thereby provide a clean working environment. A typical application is within metal, chemical, minerals and mining, smelters, waste management, asphalt, energy or wood working industry. Such system typically comprises a filter box comprising a housing containing a plurality of filter elements. The filter elements may by way of example be in the form of filter bags or filter tubes which are arranged side by side in a plurality of rows. In use, a gaseous fluid flow, contaminated with particulate matter is directed to pass into the housing via one or more inlets and allowed to leave the housing via one or more outlets. During its passage from the inlet to the outlet, the particulate matter is captured and retained on the exterior surface of the filter elements while the filtrated fluid is allowed to escape through outlets communicating with the interior of the filter elements. Over time, a dust cake will be formed on the outer surface of the filter element. As the dust cake is built up, the flow resistance of the filter element will gradually increase. The increase in flow resistance will cause a pressure loss of the fluid flow when passing through the filter elements which, in turn, impairs the discharge of the cleaned fluid or requires the use of a more expensive and high-energy suction device. It is preferred that the filter elements are cleaned on a regular basis to maintain a high performance. The cleaning is typically made by periodically pulsing pressurized air into the interior of the filter elements or by using a reversed air flow, i.e. from the inside to the outside of the filter elements. The dust cakes that have been accumulated on the exterior surfaces of the filter elements will be removed by gravity and fall to the ground or into a collector from which the dust easily may be removed.

Every now and then there are holes formed in the filter elements. This may by way of example occur due to wear of the filter material due to the repeated pressure pulses in combination with abrasive nature of the particulate matter. Holes may also occur due to hot particulate matter or even sparks. Thus, the particulate matter form burn marks which may cause leakage and in the worst case scenario even a fire inside the housing. A leakage may be detected by arranging a sensor in the outlet duct. However, this sensor will indicate that there is a leakage somewhere in any of the plurality of filter elements. This makes it very time consuming and extremely costly to close down not only the filter box but also the system upstream in the process which the filter box serves, and then review the filter elements to locate the defect filter element and replace the same.

In the event a fire should occur inside the filter housing, it is necessary to open the housing to get access to the filter elements to initiate fire extinguishing. This is typically made by opening the access doors to the housing and then sprinkle water or flush the interior with water through fire hoses. Opening of the access doors is however very hazardous since it will bring oxygen in an uncontrolled manner into the former relatively secluded filters and really start the filters to burn down completely. Should that happen, it is often necessary to replace the housing completely which as such requires also the upstream process to be stopped for a couple of weeks/months.

There is hence a need for a system that allows an easy detection and location of leaking filter elements, and which based on that information allows a simple and fast replacement of the malfunctioning filter element with a minimum of downtime.

### Summary

One object of the present invention is to provide a filter system that allows an easy detection and location of a malfunctioning filter element or at least a sub-set containing a malfunctioning filter element.

Another object of the invention is to provide a filter system that allows a simple fire extinguishing with a minimum of damages to the structural components.

According to a first aspect, a filter system is provided. The filter system comprises:
a housing having a first zone and a second zone separated by a partition wall, an inlet duct configured to receive and supply a dust laden gas flow into the first zone, and an outlet duct configured to release a filtrated gas flow from the second zone;
a plurality of filter sections arranged in the first zone side by side along a longitudinal direction of the housing, said filter sections comprising filter elements, wherein the first zone is configured to communicate with the second zone via an outlet opening arranged in each filter element and which outlet opening is aligned with a throughgoing hole in the partition wall, thereby allowing a filtrated gas flow to be fed from the first zone to the second zone;
a filter cleaning device arranged in the second zone, the filter cleaning device being configured to selectively clean a sub-set of filter sections by ejecting a cleaning air flow into the filter elements; and
a sensor arrangement configured to detect and determine an abnormal presence of dust in the released filtrated gas flow, and to associate a determination of an abnormal presence of dust with a specific sub-set of filter section based on the presently cleaned sub-set of filter sections.

The filter system comprises a dust cleaning device which as such is well known in the art and links this with a sensor arrangement to thereby provide a filter system where it is possible to identify a leakage or mal-performance in a specific sub-set of filter sections. This is made by linking information that is available from a sensor arrangement which is configured to detect and determine an abnormal presence of dust in the released filtrated gas flow with information of which is the presently cleaned sub-set of filter sections. Based on this information, that specific sub-set of filter sections and/or the previous cleaned sub-set of filter sections may readily be manually or visually examined by an operator to pinpoint a specific filter element in the sub-set and replace the same. The downtime of the system may thereby be substantially reduced. Further, by continuously operating the filter cleaning device to clean the plurality of filter sections, one after the other in a repetitive pre-determined scheme, the performance of a sub-set of filter sections may be monitored over time to thereby allow scheduling of maintenance of the filter elements instead of only acting when necessary.

The sensor arrangement may also be used to detect a fire hazard. If the dust content in the clean gas rises very quickly, within a certain time, it can be assumed that one or more filter bags have been damaged very quickly. The most common cause of this is a fire.

In the context of the invention, the term "*sub-set*" is to be understood as one or more filter elements that are configured to be cleaned by the filter cleaning device during one cleaning cycle. A "*cleaning cycle*" is to be understood as cleaning measures dedicated and performed before initiating cleaning a subsequent sub-set. The cleaning cycle uses a cleaning air flow. The cleaning air flow may be a reversed air flow, i.e. an air flow from the inside of the filter element to the outside of the filter element. It may also be jets of pressurized air. The pressurized air may be provided as pulsating jets. The cleaning cycle may by way of example comprise provision of one or more pulses of pressurized air or a flow of reversed air into the one or more filter elements in the sub-set. It is also to be understood that the cleaning may be provided by using mechanical vibrations. In the case two or more filter elements are arranged in a row, each row having an extension transverse to the longitudinal extension of the housing, a sub-set may comprise one or more rows.

The filter cleaning device may be continuously or stepwise movable back and forth along the longitudinal direction of the housing for selectively cleaning a sub-set of filter sections associated with a current position of the filter cleaning device; or
the filter cleaning device may be fixedly arranged and be configured to eject a cleaning air flow in a defined sequence in view of a plurality of filter sections.

The residence time at each sub-set may by way of example be 5-30 seconds before moving on to the next sub-set. Once the cleaning device has reached the other end of the housing, the cleaning device may be set to be returned to the first end and start the cleaning anew. It is to be understood that the cleaning cycle may be changed and also the residence time. By continuously repeating the cycle, it is possible to immediately identify a failure, but also to follow the performance of a sub-set over time to see if there is an upcoming filter failure.

Alternatively, the filter cleaning device may be configured to be fixedly arranged and be configured to eject a cleaning air flow in a defined frequency or in a defined sequence.

No matter if the filter cleaning device is configured to be moved continuously or be fixedly arranged, it may be configured to eject a cleaning air flow in an event driven manner. In the context of the invention, the term "*event driven*" should be understood as that is configured to eject a cleaning air flow only when certain boundary conditions relating to the overall operation conditions of the filter system are met. Examples of such boundary conditions are signals from sensors configured to detect a feature such as pressure in the air in the housing and/or power consumption on motors and or fans. Increased air pressure or increased power consumption may be used as an indication of dirty filters with a need for cleaning.

The sensor arrangement may comprise one or more sensors which are arranged in or adjacent the outlet duct. The one or more sensors may be arranged in the outlet duct adjacent the inlet thereof or along the extension of the outlet duct.

The sensor may be a triboelectric sensor. A triboelectric sensor operates by measuring the mass particulate concentration by sensing the frictional charge which is created when particles, such as dust particles, collide with a conductor. By evaluating this charge with a predetermined threshold value, the information may be used to detect if the amount of dust in the released filtrated gas is acceptable or not. If acceptable, i.e. below the predetermined threshold value, no action is necessary. If the threshold value is reached or even exceeded, an alarm may go off requiring an action to be taken.

The sensor arrangement may be configured to be continuously or discontinuously operated or be event driven. Thereby data may be collected over a long period of time which allows a creation of a good tracking history and understanding of the overall performance of the filter system over time. Also, by a continuous operation, an instant action may be taken in the event of a filter failure.

Each filter section may comprise a plurality of filter elements arranged in a row having an extension transverse to the longitudinal direction of the housing, the row preferably having a vertical extension. In such row, the filter elements may be arranged as vertically stacked discrete filter elements.

Each sub-set of filter sections may comprise less than 20 % of the total number of filter sections, and more preferred less than 10 % of the total number of filter sections.

Each sub-set of filter sections may comprise only one filter section.

The filter elements may be filter bags or filter tubes, and each filter bag or filter tube may comprise a wall portion of a filter material, whereby the dust laden gas flow is configured to be fed through the wall portion in a direction from an exterior side thereof to an interior side of thereof. Accordingly, during operation, the dust will be trapped on the exterior surface of the filter material. When the dust is removed by using the cleaning device, the removed dust will fall downwards and be collected in a dust colleting device.

The sensor arrangement may further comprise at least one temperature sensor, and the at least one temperature sensor may be arranged in the housing and/or in the inlet duct. The temperature sensor may be configured to detect and determine an abnormal temperature elevation during a standstill of the system. While the dust sensor may be used to determine any fire hazard caused during operation of the filter system, the temperature sensor is used to determine any risk of fire during a standstill.

A wall portion of the housing comprises one or more fittings configured to allow connection to a firehose or a fire-extinguishing equipment. The fire-extinguishing equipment may by way of example be a sprinkler system or a system using an inert gas.

According to another aspect, a sensor arrangement configured to monitor performance of filter elements in a filter system according to any of claims 1-11 is provided. The sensor arrangement comprises a sensor being arranged in an outlet duct of the filter system, and a processor being configured to receive a signal from the sensor and compare said signal with a predetermined threshold value to thereby determine an abnormal presence of dust in the released filtrated gas flow, and to associate a determination of an abnormal presence of dust with a specific sub-set of filter section based on the presently cleaned sub-set of filter sections. The sensor arrangement may also be used to detect a fire hazard. If the dust content in the clean gas rises very quickly, within a certain time, it can be assumed that one or more filter bags have been damaged very quickly. The most common cause of this is a fire.

The sensor arrangement may further comprise at least one temperature sensor configured to communicate with the processor, and wherein the processor is further configured to detect and determine an abnormal temperature elevation. The at least one temperature sensor may be configured to detect and determine an abnormal temperature elevation during a standstill of the system. While the dust sensor may be used to determine any fire hazard caused during operation of the filter system, the temperature sensor may be used to determine any risk of fire during a standstill.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses schematically one example of a prior art filter system.
Fig. 2 schematically discloses the operation of a cleaning device.
Fig. 3 discloses one example of a filter system according to the invention with a sensor arrangement.
Figs. 4A discloses, highly schematically, a filter section with a plurality of filter elements arranged in a row.
Figs. 4B discloses, highly schematically, a sub-set of filter sections.
Fig. 5 discloses, highly schematically one embodiment of a cleaning device.
Fig. 6 discloses, highly schematically one embodiment of a cleaning device.
Fig. 7 discloses, highly schematically a filter system with an integrated firefighting arrangement.

### Detailed description

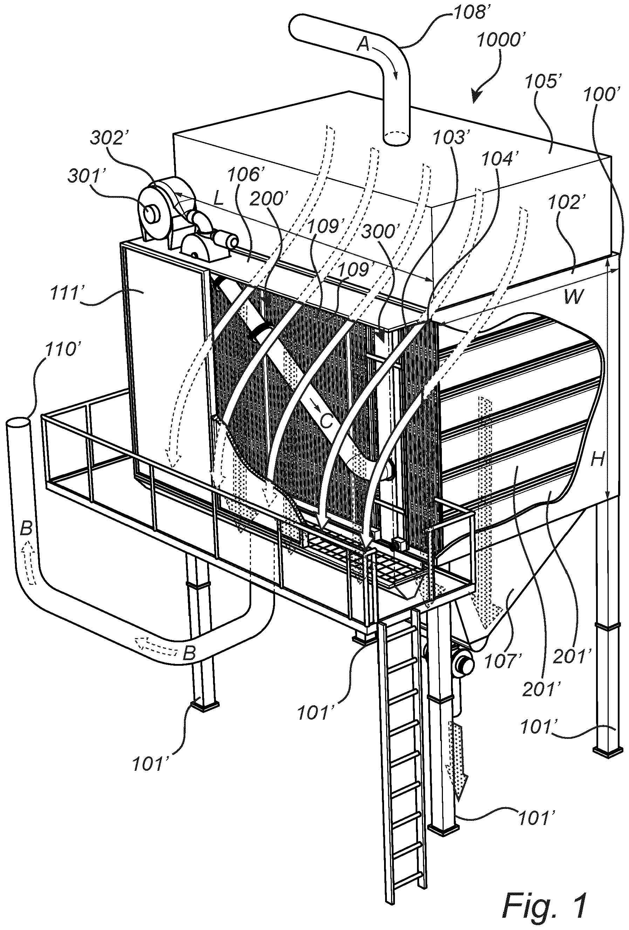

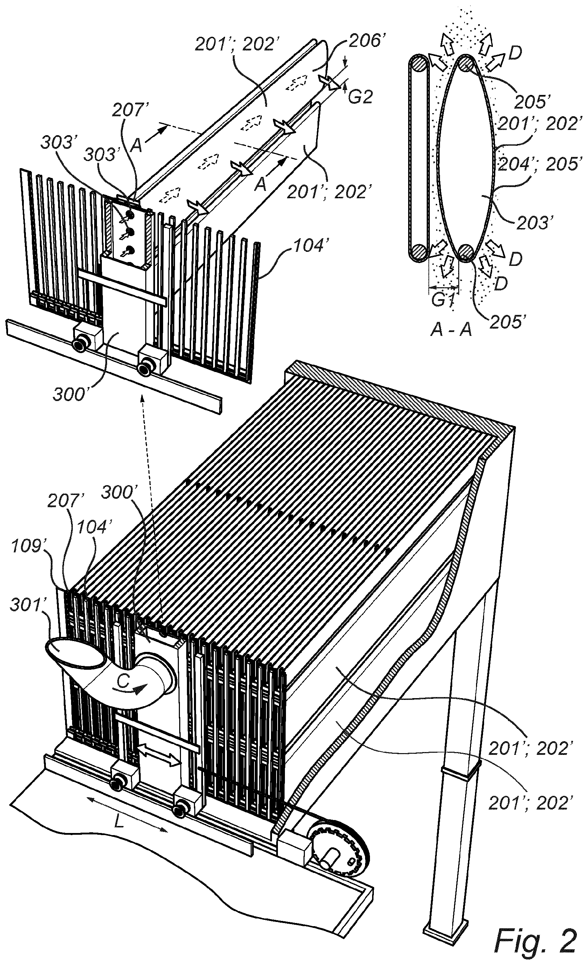

Before going into the details of the present invention a general explanation of the design and operation of a typical prior art filter system 1000' will be given with reference to Figs. 1 and 2.

Fig.1 discloses one example of a prior art filter system. To facilitate the understanding, the filter system 1000' is schematically illustrated. The filter system 1000' comprises a housing 100', a plurality of filter sections 200' and a filter cleaning device 300'. The housing 100' has a length which in the context of the application will be referred to as the longitudinal direction L. The housing 100' further has a height H and a width W.

The housing 100' is illustrated as being supported by four legs 101'. The housing 100' may virtually be seen as being divided into a first zone 102' and a second zone 103'. The first and second zones 102', 103' are separated by a partition wall 104' which allows communication between the first and second zones 102', 103'. The housing 100' further comprises an inlet section 105', an outlet section 106' and a collector section 107'.

The inlet section 105' comprises a schematically disclosed inlet duct 108' configured to receive and supply a dust laden gas flow into the first zone 102' which thereby forms a dirty zone. The first zone 102' contains the plurality of filter sections 200'. The filter sections 200' are arranged side by side along the longitudinal direction L of the housing 100'. The first zone 102' communicates with the second zone 103' via throughgoing openings 109' in the partition wall 104'. Thus, a cleaned air is released from the first zone 102' to the second zone 103' through the openings 109', whereby the second zone 103' forms a clean air zone. The second zone 103' comprises an outlet duct 110' which is configured to release a filtrated gas flow from the second zone 103'. The outlet duct 110' is typically connected to a chimney (not disclosed).

The walls of the housing 100' comprise one or more access doors 111'. It is preferred the access door(s) 111' are arranged to allow access to at least the second zone 103' along the full longitudinal extension L and height H of the housing 100'. Thereby easy access to the filter sections 200' is allowed. The skilled person will understand that the number of access doors 111' may be adapted to the size of the housing 100'.

The collector section 107' is arranged beneath the first zone 102'. The collector section 107' is configured to collect dust to be removed from the filter sections 200' during cleaning thereof. The use of a collector section as such is a well known in the art and may by way of example be provided with a non-disclosed feeding screw which during rotation transfers the collected dust out of the collector section 107' to a non-disclosed container. Alternatively, the collector section 107' may be provided as a funnel where the dust falls down by gravity into a container.

The plurality of filter sections 200' are arranged in the first zone 102' side by side along the longitudinal direction L of the housing 100'. In the embodiment disclosed in Fig.1, each filter section 200' comprises six discrete filter elements 201' which are arranged side by side in a row in a direction transverse to the longitudinal direction L of the housing 100'. In the disclosed embodiment, each filter element 201' has an extension along substantially the full width W of the housing 100' and its first zone 102'. It is to be understood that a plurality of filter elements 201' may be arranged side by side as seen in the direction transverse to the longitudinal direction L.

As is best seen in Fig. 2, the filter elements 201' are disclosed as being configured as filter bags 202'. A filter bag 202' may be described as a hollow body having an inner flow channel 203' which is defined by opposing wall portions 204' made of an air permeable filter material 205'. Each filter element 201' has a longitudinal extension with a substantially uniform cross section. The cross section of the inner flow channel 203' is disclosed as oblong or oval. Other geometries such as tubes having a substantially circular cross section may be used with remained function.

The cross section of the inner flow channel 203' may be maintained by an inner support structure 205', see cross section A-A in Fig. 2.

Each filter element 201' has a closed end 206' and an opposing open end 207'. The open end 207' is configured to face the partition wall 104'. The open end 207' of each filter element 201', and hence the longitudinal extension of the inner flow channel 203' is configured to be aligned with a corresponding through-going opening 109' in the partition wall 104'.

The filter sections 200' with their filter elements 201' are arranged side by side in the first zone 102' with intermediate gaps G1, G2 between their respective exterior wall portions. It is to be understood that the number of filter sections 200' and the number of filter elements 201' depends on the kind of equipment to be connected upstream the filter system and its capacity.

Now turning to Figs. 1 and 2 in combination. In operation, see arrows in Fig. 1, a dust-laden air flow A is introduced to the first zone 102' via the inlet duct 108'. The dust-laden air flow A is distributed inside the first zone 102' in the gaps G1, G2 which are formed between the exterior surfaces of the respective filter elements 201', see Fig. 2. As a result of the second zone 103' being connected to a non-disclosed suction source, and the inner flow channels 203' of the filter elements 101' are arranged in communication with the second zone 103' via the openings 109' in the partition wall 104', the air will be sucked into the inner flow channels 203' of the filter elements 210' and further into the second zone 103'. As the initially dust-laden air is forced to pass through the walls of the filter elements 201', which walls are made of an air permeable filter material, the dust will be trapped on the exterior wall portions of the filter elements 201', while the thus filtrated and cleaned air will pass into the respective inner flow channels 203' before entering the second zone 103' as a flow of cleaned air B. From the second zone 103', the cleaned air is released into the ambience via the outlet duct 110'.

A filter cleaning device 300' is arranged in the second zone 103'. The filter cleaning device 300 is in the disclosed embodiment movable back and forth along the longitudinal direction L of the housing 100' for selectively cleaning a sub-set of filter sections 200' associated with a current position of the filter cleaning device 300'. The filter cleaning device 300' is connected to an inlet 301' which via a suction arrangement 302' is configured to supply a flow of clean air C from the ambience into the filter cleaning device 300'.

As is best seen in Fig. 2, the supply of clean air C is directed via nozzles 303' as a reversed air flow or pulses of pressurized air into the inner flow channels 203' of each of the filter elements 201'. The cleaning air flow causes a vibration of the wall portions of the filter elements 201' whereby dust cakes that are accumulated over time on the exterior walls of the filter elements 201 are removed, see arrows D. The dust cakes may be allowed to fall to the bottom of the collector 107'.

The filter cleaning device 300' may be configured to be moved continuously or stepwise back and forth along the longitudinal direction L of the housing 100'. In one exemplified cycle, the cleaning device 300' is moved step-wise in the longitudinal direction L from one end of the housing 100' to the other while making a stop at each sub-set of filter elements 201' to clean the same, before moving on to the next sub-set of filter elements 201'. The residence time at each sub-set may by way of example be 5-30 seconds before moving on to the next sub-set. Once the cleaning device 300' has reached the other end of the housing 100', the cleaning device 300' may be set to be returned to the first end and start the cleaning cycle anew.

The description above should be considered as a general overview of the design and operation of a typical filter system to improve the understanding of the inventive concept to be described below.

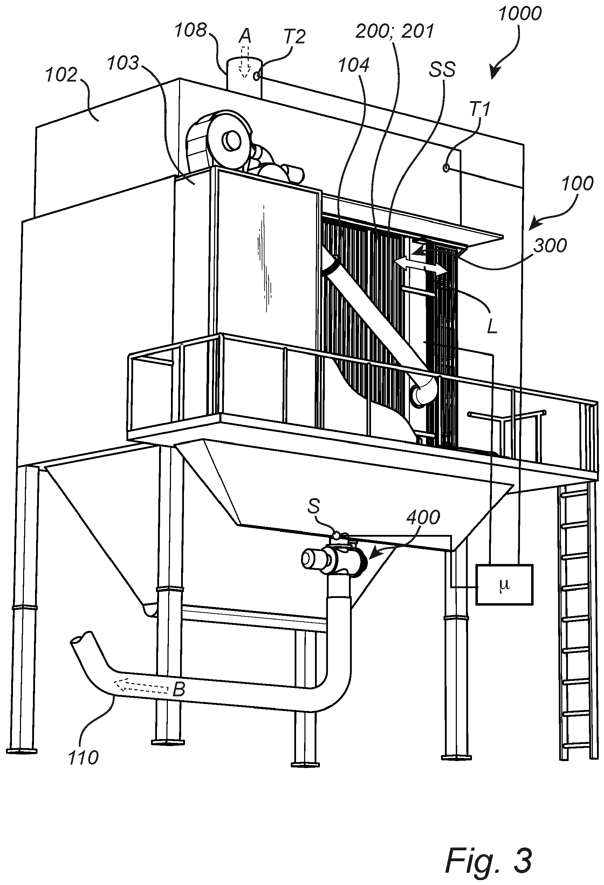

Now turning to Fig. 3, a filter system 1000 according to the invention will be described. The filter system 1000 has the same overall design and function as that previously described. Accordingly, equal reference numbers refer to equal features.

The inventive filter system 1000 uses the dust cleaning device 300 which as such is well known in the art and which is described above and links this with a sensor arrangement 400 to thereby provide an inventive filter system 1000 in which it is possible to identify a leakage or mal-performance in a specific sub-set of filter sections 200. This is made by linking information that is available from the sensor arrangement 400 which is configured to detect and determine an abnormal presence of dust in the released filtrated gas flow with information of which is the presently cleaned sub-set of filter sections 200. Based on this information, that specific sub-set of filter sections 200 and/or the previous cleaned sub-set of filter sections may readily be manually or visually examined by an operator to pinpoint a specific filter element 201 in the sub-set filter section 200 and replace the same.

In the context of the invention, the term "*sub-set*" SS is to be understood as one or more filter elements 201 that are configured to be cleaned by the filter cleaning device 300 during one cleaning cycle.

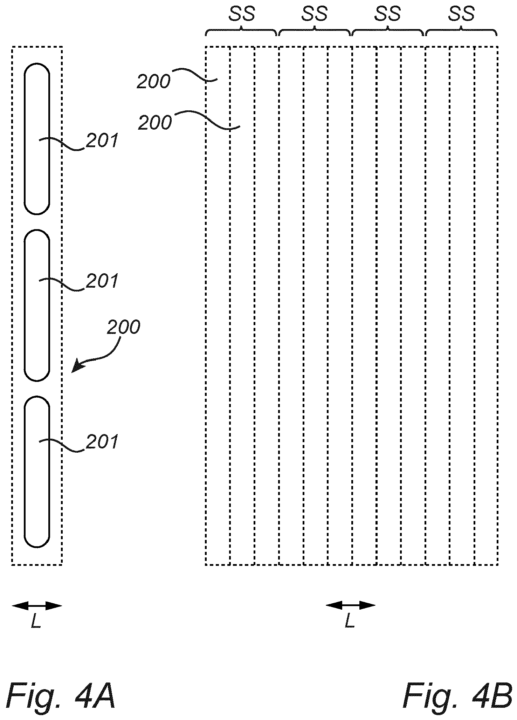

As is schematically illustrated in Fig. 4A, each filter section 200 may comprise a plurality of discrete filter elements 201 arranged in a row having an extension transverse to the longitudinal direction L of the housing. The row preferably has a vertical extension, i.e. along the height H of the housing. Each filter section 200 may comprise a plurality of filter elements 201 arranged in two or more rows, each row having an extension transverse to the longitudinal direction L of the housing 100.

As is schematically illustrated in fig. 4B, the housing may comprise a plurality of sub-sets SS of filter sections 200 arranged side by side as seen along the longitudinal direction L of the housing. Each sub-set SS may comprise one or more filter sections 200. A cleaning device, no matter if it is movable or fixed, may be configured to serve a sub-set SS of filter sections 200. In its most simple form, each sub-set SS may comprise only one filter section 200.

Each sub-set SS of filter sections may comprise less than 20 % of the total number of filter sections 200 in the housing 100, and more preferred less than 10 % of the total number of filter sections 200 in the housing 100.

A "*cleaning cycle*" is to be understood as cleaning measures dedicated and performed before initiating cleaning a subsequent sub-set. The cleaning cycle may by way of example comprise provision of a reversed air flow or one or more jets of pressurized air into the one or more filter elements 201 in the sub-set SS of filter sections 200. The reversed air flow or jets of pressurized air will cause mechanical vibration of the filter element 201 which will remove dust from its exterior surface. Now turning to Fig. 3. As previously given, the filter system 1000 in Fig. 3 is structurally of the same type as that previously described with reference to Figs. 1 and 2. Thus, the filter system 1000 comprises a housing 100 having a first zone 102 and a second zone 103 separated by a partition wall 104, an inlet duct 108 configured to receive and supply a dust laden gas flow A into the first zone 102, and an outlet duct 110 configured to release a filtrated gas flow B from the second zone 103. A plurality of filter sections 200 comprising filter elements 201 are arranged in the first zone 102 side by side along the longitudinal direction L of the housing 100. As has been previously discussed with reference to Fig. 2, the first zone 102 is configured to communicate with the second zone 103 via an open end 207 in each filter element 201 forming an outlet opening. The open end 207 is aligned with a throughgoing hole 109 in the partition wall 104. A filtrated gas flow is thereby allowed to be fed from the first zone 102 to the second zone 103. The filter cleaning device 300 is arranged in the second zone.

As has been described with reference to Fig. 2, the filter cleaning device 300 may be configured to be moved continuously or stepwise back and forth along the longitudinal direction L of the housing 100. In one exemplified cycle, the cleaning device 300 is moved step-wise from one end of the housing 100 to the other while making a stop at each sub-set SS of filter elements 201 to clean the same, before moving on to the next sub-set SS of filter elements 201. The residence time at each sub-set SS may by way of example be 5-30 seconds before moving on to the next sub-set. Once the cleaning device 300 has reached the other end of the housing 100, the cleaning device 300 may be set to be returned to the first end and start the cleaning anew. It is to be understood that the cleaning cycle may be changed and also the residence time.

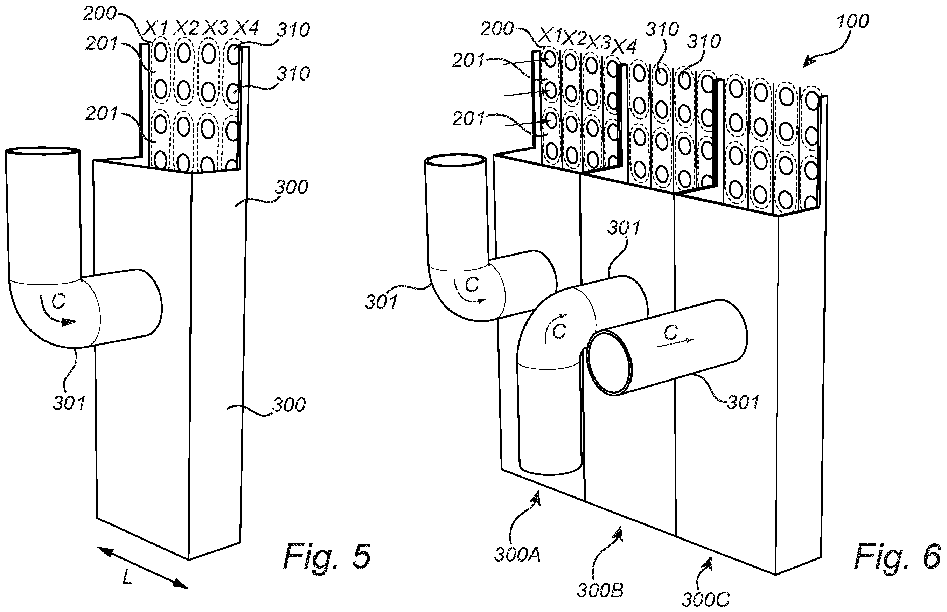

In another embodiment schematically disclosed in Fig. 5, the filter cleaning device may be configured to eject a reversed air flow or pulses of pressurized air in a defined sequence in view of a plurality of filter sections 200 which are arranged side by side as seen along the longitudinal direction L of the housing. In the disclosed embodiment, the filter cleaning device 300 is provided with a plurality of sets X1-X4 of nozzles 310 allowing direction of a cleaning air flow or jets of pressurized cleaning air into the inner flow channels of the filter elements 201 in a plurality of filter sections 200. By cleaning one sub-set SS of filter sections 200 at a time starting with the nozzles 310 of set X1 and then proceeding with the nozzles of set X2 etc, the sensor arrangement 400 (to be described) will be able to associate a determination of an abnormal presence of dust with a specific set X1-X4 of nozzles 310 and thereby associate a determination of an abnormal presence of dust with a specific sub-set of filter section 200.

In yet another alternative solution, see Fig. 6, a plurality of such filter cleaning devices 300A, 300B, 300C are disclosed as being fixedly arranged side by side to thereby allow all or a group of filter sections 200 in the housing 100 to be served. Each filter cleaning device 300A, 300B, 300C may be provided with a plurality of nozzles 310 allowing direction of a reversed air flow or jets of pressurized cleaning air into the inner flow channels of the filter elements 201 of the filter sections 200. By cleaning one sub-set of filter sections 200 at a time starting with the nozzles 310 of set X1 and then proceeding with the nozzles of set X2 etc, the sensor arrangement 400 (to be described) will be able to associate a determination of an abnormal presence of dust with the current set of nozzles X1-X4 and thereby associate a determination of an abnormal presence of dust with a specific sub-set of filter section. The filter cleaning devices may be operated in a predetermined sequence.

No matter if the filter cleaning device 300 is configured to be moved continuously or be fixedly arranged, it may be configured to eject a cleaning air flow in an event driven manner. Accordingly, the cleaning device 300 may be configured to eject a cleaning air flow only when certain boundary conditions relating to the overall operation conditions of the filter system 1000 are met. Examples of such boundary conditions are signals from non-disclosed sensors configured to detect features such as pressure in the air in the housing 100 and/or power consumption on motors and or fans. Increased air pressure or increased power consumption may be used as an indication of dirty filters with a need for cleaning.

Now explicitly turning to Fig. 3 the sensor arrangement 400 will be discussed. According to the invention, the outlet duct 110 which is connected to the second zone 103 is provided with a sensor arrangement 400. The sensor arrangement 400 comprises a processor, a control unit µ and one or more sensors S in the form of dust sensors which are configured to measure presence of dust. The one or more dust sensors S are arranged in the outlet duct 110. In the disclosed embodiment one single dust sensor S is used. This dust sensor S is arranged inside the outlet duct 110 in a position downstream the housing 100. Thereby the flow of filtrated gas will pass the dust sensor S on its way through the outlet duct 110 towards the ambience. The skilled person understands that the one or more dust sensors S may be arranged in the inlet of the outlet duct 110 or in a position along the extension of the outlet duct 110. The one or more dust sensors S are connected to the processor and the control unit µ to allow a wired or wireless communication.

The dust sensor S is a triboelectric sensor. A triboelectric sensor operates by measuring the mass particulate concentration by sensing the frictional charge which is created when particles, such as dust particles, collide with a conductor. By evaluating this charge with a predetermined threshold value, the information is used to detect if the amount of dust in the released filtrated gas is acceptable or not. More precisely, the sensor arrangement 400 is configured to detect and determine an abnormal presence of dust in the released filtrated gas flow. The evaluation is prosecuted by the processor and the control unit µ.

The sensor arrangement 400 is configured to associate a determination of an abnormal presence of dust with the current position of the filter cleaning device 300 and thereby associate a determination of an abnormal presence of dust with a specific sub-set SS of filter sections 200. If acceptable, i.e. below the predetermined threshold value, no action is necessary, i.e. the filter elements 201 in that specific filter section 200 are considered to be well operating without any holes allowing dirty gas to pass from the first zone 102 being a dirty zone into the second zone 103 being a clean zone. If it instead should be determined that the threshold value is reached or even exceeded, the sensor arrangement 400 may be configured to let an alarm go off requiring an action to be taken. This alarm may be audial, e.g. by a siren or visual by e.g. a light signal. It may also be visualized as a message on a graphical user interface.

The sensor arrangement 400 may be configured to be operated discontinuously or continuously or be event driven. Data may be collected over a long period of time which allows compilation of a good tracking history and understanding of the overall performance of the filter system 1000 over time.

The sensor arrangement 400 may further comprise at least one temperature sensor T1; T2. The at least one temperature sensor T1; T2 may be arranged in the housing 100 and/or in the inlet duct 108. In the disclosed embodiment a first temperature sensor T1 is schematically disclosed as being arranged in the housing 100. A second temperature sensor T2 is schematically disclosed as being arranged in the inlet duct 108. The at least one temperature sensor T1; T2 is configured to detect and determine an abnormal temperature elevation during a standstill of the filter system. While the dust sensor S may be used to determine any fire hazard caused during operation of the filter system, the at least one temperature sensor T1; T2 is used to determine any risk of fire during a standstill.

By monitoring the temperature and abnormal presence of dust, it is made possible to evaluate, based on signals from the sensors S, T1, T2 if it is a leakage due to wear or heat and link that information to an individual subset of filter sections 200. It is also possible to see if there is any possible fire starting during a standstill.

The measured temperature may be compared with a predetermined threshold value which corresponds to a predetermined acceptable temperature. If the threshold value is exceeded, that may be indicative of a fire or glow.

No matter what type of sensors S, T1, T2 are included in the sensor arrangement 400, the sensor arrangement 400 may be configured to be continuously or discontinuously operated or be event driven. By a continuous operation, an instant action may be taken in the event of a filter failure or fire. By a discontinuous operation, a measurement and evaluation of the received signals may be made at certain intervals. By way of example the measurement and evaluation may be made after subjecting all filter sections in the housing for a predetermined number of cleaning cycles. Typically, it takes a 3-5 seconds to clean one filter section. No matter continuous or discontinuous measurement, the sensor arrangement 400 and the processor connected thereto may be used to compile data over a long period of time which allows a creation of a good tracking history and understanding of the overall performance of the filter system over time.

In case the sensor arrangement 400 should be event driven, the sensor arrangement may by way of example be set to operate provided certain boundary conditions relating to the overall operation conditions of the filter system 1000 are met. Examples of such boundary conditions are signals from additional sensors configured to detect a feature such as pressure or power consumption on motors and/or fans.

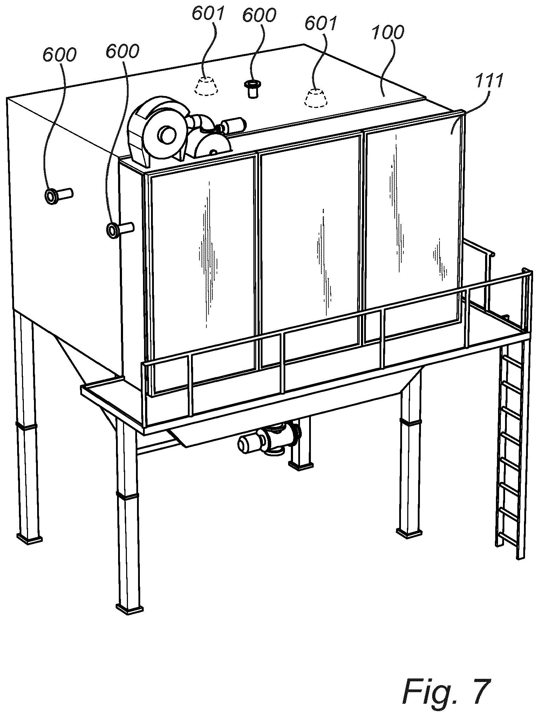

As is schematically illustrated in Fig. 7, the wall portions of the housing 100 may be provided with one or more fittings 600 configured to allow connection of a firehose or a fire-extinguishing equipment. The fittings 600 are preferably provided as standardized couplings used in firefighting to allow a quick and fail-safe connection of fire hoses to thereby allow firefighting without opening the access doors 111. Opening of an access door 100 to access a fire results in a sudden supply of oxygen that in the worst-case scenario may promote the fire to develop in an uncontrolled manner. It is to be understood that the number of fittings 600 and their positions may vary depending on the design and size of the housing 100 and also the type of dust to be filtrated.

Further, the housing 100 may be provided with integrated fire-extinguishing equipment 601. Such equipment is highly schematically disclosed. As non-limited examples, such equipment may be a sprinkler system or a system using an inert gas.

As previously given, the filter elements 201 may be filter bags or filter tubes. Whereas a filter bag typically has a substantially rectangular or oblong cross section with two opposing substantially parallel side walls, a filter tube typically has a substantially circular or oval cross section with single curved walls. No matter cross section, the wall portion defines the inner flow channel. Filter bags allow a larger filter area in the housing, simply since flat filter elements may be packed in a more dense pattern than circular filter elements. No matter cross section, each filter element is provided with a wall portion of a filter material. The filter material, e.g. textile or felt should be permeable to air while preventing particulate matter from passing. In operation, the dust laden gas flow is configured to be fed through the wall portion in a direction from an exterior side thereof to an interior side of thereof into the inner flow channel. Accordingly, during operation, the dust will be trapped on the exterior surface of the filter material. Over time the dust will accumulate as dust cakes which must be removed on a regular basis to ensure high efficiency in terms of energy consumption.

To summarize, the invention provides a filter system with an integrated sensor arrangement which is configured to monitor performance of filter elements in the filter system. The sensor arrangement comprises at least one sensor which is arranged in the outlet duct of the filter system, and a processor being configured to receive a signal from the sensor and compare said signal with a predetermined threshold value to thereby determine an abnormal presence of dust in the released filtrated gas flow, and to associate a determination of an abnormal presence of dust with a specific sub-set of filter section based on the presently cleaned sub-set of filter sections. The sensor arrangement may further, also as an integral part thereof, comprise at least one temperature sensor which configured to communicate with the processor, and wherein the processor is further configured to detect and determine an abnormal temperature elevation during a standstill.

The foregoing description of the preferred embodiments has been furnished for illustrative and descriptive purposes. It is not intended to be exhaustive, or to limit the embodiments to the variants described. Many modifications and variations will obviously be apparent to one skilled in the art. The embodiments have been chosen and described in order to best explicate principles and practical applications, and to thereby enable one skilled in the art to understand the embodiments in terms of its various embodiments and with the various modifications that are applicable to its intended use. The components and features specified above may, within the framework of the embodiments, be combined between different embodiments specified.

## Claims

1. Filter system, the system comprising:
a housing (100) having a first zone (102) and a second zone (103) separated by a partition wall (104), an inlet duct (108) configured to receive and supply a dust laden gas flow into the first zone (102), and an outlet duct (110) configured to release a filtrated gas flow from the second zone (103);
a plurality of filter sections (200) arranged in the first zone (102) side by side along a longitudinal direction of the housing (100), said filter sections (200) comprising filter elements (201), wherein the first zone (102) is configured to communicate with the second zone (103) via an outlet opening arranged in each filter element (201) and which outlet opening is aligned with a throughgoing hole (109) in the partition wall (104), thereby allowing a filtrated gas flow to be fed from the first zone (102) to the second zone (103);
a filter cleaning device (300) arranged in the second zone (103), the filter cleaning device (300) being configured to selectively clean a sub-set of filter sections (200) by ejecting a cleaning air flow into the filter elements (201); and
a sensor arrangement (400) configured to detect and determine an abnormal presence of dust in the released filtrated gas flow, and to associate a determination of an abnormal presence of dust with a specific sub-set of filter sections (200) based on the presently cleaned sub-set of filter sections (200).

2. The filter system according to claim 1, wherein the filter cleaning device (300) is continuously or stepwise movable back and forth along the longitudinal direction of the housing (100) for selectively cleaning a sub-set of filter sections (200) associated with a current position of the filter cleaning device (300); or
wherein the filter cleaning device (300) is fixedly arranged and is configured to eject a cleaning air flow in a defined sequence in view of a plurality of filter sections (200).

3. The filter system according to claim 1 or 2, wherein the sensor arrangement (400) comprises one or more sensors (S) which are arranged in or adjacent the outlet duct (110).

4. The filter system according to any of the preceding claims, wherein the sensor (S) is a triboelectric sensor.

5. The filter system according to any of the preceding claims, wherein the sensor arrangement (400) is configured to be continuously or discontinuously operated or be event driven.

6. The filter system according to any of the preceding claims, wherein each filter section (200) comprises a plurality of filter elements (201) arranged in a row having an extension transverse to the longitudinal direction of the housing (100), the row preferably having a vertical extension.

7. The filter system according to any of the preceding claims, wherein each sub-set of filter sections (200) comprises less than 20 % of the total number of filter sections, and more preferred less than 10 % of the total number of filter sections.

8. The filter system according to any of the preceding claims, wherein each sub-set of filter sections (200) comprises only one filter section.

9. The filter system according to any of the preceding claims, wherein the filter elements (201) are filter bags or filter tubes, and wherein each filter bag or filter tube comprises a wall portion of a filter material, whereby the dust laden gas flow is configured to be fed through the wall portion in a direction from an exterior side thereof to an interior side of thereof.

10. The filter system according to any of the preceding claims, wherein the sensor arrangement (400) further comprises at least one temperature sensor (T1; T2), wherein the at least one temperature sensor (T1; T2) is arranged in the housing (100) and/or in the outlet duct (110).

11. The filter system according to any of the preceding claims, wherein a wall portion of the housing (100) comprises one or more fittings (600) configured to allow connection to a firehose or a fire-extinguishing equipment.

12. A sensor arrangement (400) configured to monitor performance of filter elements (201) in a filter system (1000) according to any of claims 1-11, said sensor arrangement (400) comprising a sensor (S) being arranged in an outlet duct (110) of the filter system (1000), and a processor being configured to receive a signal from the sensor (S) and compare said signal with a predetermined threshold value to thereby determine an abnormal presence of dust in the released filtrated gas flow, and to associate a determination of an abnormal presence of dust with a specific sub-set of filter section (200) based on the presently cleaned sub-set of filter sections (200).

13. The sensor arrangement according to claim 12, wherein the sensor arrangement (400) further comprises at least one temperature sensor (T1; T2) configured to communicate with the processor, and wherein the processor is further configured to detect and determine an abnormal temperature elevation.
